# EUROPÄISCHE PATENTSCHRIFT

(11) **EP 2 814 649 B1**
(45) Veröffentlichungstag und Bekanntmachung des Hinweises auf die Patenterteilung: **21.06.2017**
(21) Anmeldenummer: 13702915.3
(22) Anmeldetag: 31.01.2013
(51) Int. Cl.: B29C 33/02, B29C 33/30, B29C 33/38, B29L 31/08

(54) **DIREKTFORM FÜR ROTORBLÄTTER FÜR WINDENERGIEANLAGEN, HERSTELLUNGSVERFAHREN UND VERWENDUNG DER FORM**
DIRECT MOLD FOR ROTOR BLADES FOR WIND TURBINES, METHOD FOR PRODUCING SAME AND USE OF SAID MOLD
MOULE DIRECT POUR PALES DE ROTOR D'ÉOLIENNES, PROCÉDÉ DE FABRICATION ET UTILISATION DU MOULE

(30) Priorität: 16.02.2012 DE 102012202376
(43) Veröffentlichungstag der Anmeldung: 24.12.2014
(73) Patentinhaber: Senvion GmbH, 22297 Hamburg (DE)
(72) Erfinder: EICHLER, Karl, 24966 SÖRUP (DE)
(74) Vertreter: Seemann & Partner Patentanwälte mbB
(86) Internationale Anmeldenummer: PCT/EP2013/000298
(87) Internationale Veröffentlichungsnummer: WO 2013/120583

(56) Entgegenhaltungen:
- WO-A1-2011/029276
- FR-A1- 2 598 648
- US-A1- 2009 084 932
- Louis C. Dorworth: "Composite tooling" In: "Composites", 1. Dezember 2001 (2001-12-01), ASM International, USA, XP055067073, ISBN: 978-0-87-170703-1 Seiten 434-440, Seite 438 - Seite 440
- RIDGARD C: "LOW TEMPERATURE CURING PREPREG SYSTEMS FOR HIGH TEMPERATURE RESISTANT, HIGH PERFORMANCE COMPOSITE MOULD TOOLS AND COMPONENTS", COMPOSITE POLYMERS, RAPRA TECHNOLOGY, SHAWBURY, SHREWSBURY, GB, Bd. 2, Nr. 1, 1. Januar 1989 (1989-01-01), Seiten 1-15, XP000026689,
- MARSH ET AL: "What are the tools of the blade trade?", RENEWABLE ENERGY FOCUS,, Bd. 9, Nr. 5, 1. September 2008 (2008-09-01), Seiten 52-54,56, XP025504820, ISSN: 1755-0084, DOI: 10.1016/S1755-0084(08)70030-9 [gefunden am 2008-09-01]

## Beschreibung

Die Erfindung betrifft eine Direktform für Rotorblätter für Windenergieanlagen, Komponenten von Rotorblättern oder Rotorblattabschnitte, eine Verwendung einer Direktform sowie ein Verfahren zum Herstellen einer Direktform für Rotorblätter für Windenergieanlagen, Komponenten von Rotorblättern oder Rotorblattabschnitte.

Rotorblätter von Windenergieanlagen werden in der Regel zunächst am Computer entworfen und hinsichtlich ihrer aerodynamischen und mechanischen Eigenschaften im Computermodell optimiert, bevor ein Urmodell eines Rotorblatts hergestellt wird, von dem dann ein Abdruck genommen wird, der dazu benutzt wird, eine Form für das Rotorblatt oder für Teile des Rotorblatts herzustellen. Diese Vorgehensweise ist zeit- und kostenintensiv und erlaubt wenig Spielraum für nachträgliche Änderungen des Designs des Rotorblatts. Wird etwa festgestellt, dass die herzustellenden oder hergestellten Rotorblätter in einigen Bereichen noch einer Überarbeitung bedürfen, so setzt dies entweder die Erstellung eines neuen Urmodells oder zumindest die Bearbeitung des Urmodells sowie die Herstellung einer neuen Form voraus.

US 2009/0084932 A1 offenbart eine Gießform für einen Windkraftanlagen-Rotorflügel, der mehrere voneinander beabstandete Formträger aufweist, wobei jeder Formträger eine im Wesentlichen einer Form des Rotorflügels entsprechende Randkonfiguration aufweist und einen von den Rändern der Formträger gestützten, biegsamen Rahmen aus Streckmetall mit Maschendraht oder Kunststofffolie zum Formen einer Außenoberfläche des Rotorflügels.

In FR 2 598 648 A1 ist eine Form zur Herstellung von Kompositteilen offenbart. Dabei handelt es sich ebenfalls um eine Fertigform, wobei die formgebenden Aussparungen in den Mallen mittels Polyethylenrohren mit rundem Querschnitt miteinander verbunden werden.

In Louis C. Dorworth, "Composite tooling", in "Composites", ASM International, USA (2001), Seiten 434 bis 440, werden Substrukturen und Konstruktionstechniken für Laminate vorgestellt, wobei Stahl-Unterstrukturen vorgestellt werden.

WO 2011/029276 A1 betrifft ein Heizungssystem für Rotorblattformen, wobei die Form ein Kompositlaminat und eine Mehrzahl von Zirkulationsrohren für Wärmetransferflüssigkeit umfasst, die zwischen zwei andere Strukturschichten eingebettet sind.

Es ist demgegenüber die Aufgabe der vorliegenden Erfindung, die Entwicklung und Herstellung von Rotorblättern und auch die Überarbeitung von Rotorblattdesigns zu beschleunigen und zu vereinfachen sowie kostengünstiger zu gestalten.

Diese Aufgabe wird gelöst durch eine Direktform für Rotorblätter für Windenergieanlagen, Komponenten von Rotorblättern oder Rotorblattabschnitte, umfassend ein Mallengerüst und einen von dem Mallengerüst im Form gehaltenen Formflächenkörper, wobei das Mallengerüst aus einer Mehrzahl von flächigen Paneelen aufgebaut ist, die quer zur Längserstreckung des Rotorblatts ausgerichtet sind und in Richtung der Längserstreckung des Rotorblatts voneinander beabstandet hintereinander angeordnet sind, wobei die Paneele des Mallengerüsts Aussparungen aufweisen, in die der Formflächenkörper eingebracht ist und die in ihrer Abfolge im Mallengerüst im Wesentlichen einen Verlauf einer Kontur eines Teils eines Rotorblattprofils nachbilden, wobei der Formflächenkörper eine Schichtstruktur aufweist, die eine Stützschicht und eine Sandwichschicht umfasst, wobei die Stützschicht aus Leisten aufgebaut ist, die die Abstände zwischen den Paneelen überbrückend in Längsrichtung des Rotorblatts ausgerichtet sind, wobei die auf der Stützschicht angeordnete Sandwichschicht eine mehrschichtige Laminatstruktur umfasst, deren Oberfläche gefräst und/oder lackiert ist und die Kontur eines Teils eines herzustellenden Rotorblatts aufweist. Ein solches Teil eines Rotorblatts kann im Rahmen der Erfindung beispielsweise eine Halbschale oder ein Schalensegment sein.

Das damit verwirklichte Konzept der Verwendung einer Direktform beschleunigt die Herstellung eines neuen Rotorblatts um fünf bis sechs Monate, da kein Urmodell mehr gefertigt werden muss. Rotorblattformen sind schneller verfügbar, so dass ein Rotorblattprototyp ca. sechs Monate früher verfügbar ist, als bislang. Außerdem entfällt die kosten- und platzintensive spätere Einlagerung eines Urmodells.

Eine entsprechende Direktform wird nicht zur Serienproduktion von Rotorblättern verwendet, kann aber für 100 bis 200 Entformungen verwendet werden.

Änderungen des Rotorblattdesigns sind mit der Direktform ebenfalls einfach möglich, da in diesem Fall die entsprechenden Paneele einfach überarbeitet oder ausgetauscht werden können, womit dem Formflächenkörper, der die eigentliche Form darstellt, eine angepasste gewünschte Form vorgegeben wird. Die auf diese Weise erreichbaren Änderungen sind zwar begrenzt, jedoch sind die Änderungen an der Rotorblattform nach der Fertigstellung des Computermodells erfahrungsgemäß von einem Ausmaß, dass sie mit der erfindungsgemäßen Direktform in der Regel dargestellt werden können.

Das Mallengerüst ist in sich selbsttragend und steif. Hierzu sind die Paneele vorzugsweise mit wenigstens einem in Längsrichtung des Rotorblatts angeordneten Träger versteift, der insbesondere als balkenartiger Carbonträger ausgebildet ist. Der Träger oder die Träger bildet bzw. bilden das Rückgrat des Mallengerüstes und bieten eine einfache Möglichkeit, die Paneele des Mallengerüstes zu versteifen.

Die Paneele sind vorzugsweise als Composit-Sandwich-Paneele ausgebildet, die insbesondere zur Aufnahme des wenigstens einen Trägers segmentiert und mit Aufnahmen für den wenigstens einen Träger ausgebildet sind. Composit-Sandwich-Paneele haben einen Kern aus einem stabilisierenden Material, beispielsweise Balsaholz, PET-Schaum oder PVC-Schaum, der einseitig oder beidseitig überlaminiert ist. Eine Versteifung der Seitenflächen erfolgt vorzugsweise, indem drei Träger verwendet werden, wobei zwei, insbesondere kleinere, Träger im Bereich der Vorderkante und der Hinterkante des Profils angeordnet sind.

Die Segmentierung der Paneele, die auch als "Mallen" bezeichnet werden können, ermöglicht es, die Struktur aus Trägern und Paneelen zur Mallengerüststruktur zusammenzusetzen, wodurch sich auch eine einfache Ausrichtung der Paneele ergibt.

Vorteilhafterweise ist die Direktform in einer Stahl-Unterstruktur angeordnet. Die Stahl-Unterstruktur ist leichtgewichtig und kann die Paneele in Position halten. Die Stahl-Unterstruktur kann für verschiedene Direktformen verwendet werden, da die Paneele des Mallengerüsts in ihrer Basisstruktur eine einheitliche Größe aufweisen können. Die Stahl-Unterstruktur begünstigt auch die Handhabung der Direktform. Dabei ist die Stahl-Unterstruktur deutlich leichter als bisherigen konventionelle Stahlgestelle für Formen für Rotorblätter.

Eine besonders einfache und schnell herstellbare Direktform ist vorzugsweise so ausgebildet, dass die Sandwichschicht nur im Wurzelbereich eine direkte Klebeverbindung aufweist. Hierbei wird unter dem "Wurzelbereich" der Wurzelbereich des zu modellierenden Rotorblatts verstanden. An dieser Stelle sind die Seitenwände besonders steil und hoch, da der Wurzelbereich eine runde Form hat. Außerdem finden im Allgemeinen im Wurzelbereich keine Nachbearbeitungen der Form statt, so dass die Sandwich-Schicht in diesem Bereich auch nicht Veränderungen unterworfen ist und daher fixiert wird.

Auf die Paneele bzw. Mallen werden in einer Leistenbauweise Leisten, beispielsweise PET-Leisten oder PVC-Leisten aufgebracht, so dass eine Grundoberfläche entsteht, die eine spätere Gleitstruktur und Isolierung darstellen. Hierauf wird die Sandwich-Schicht bzw. das Sandwich-Laminat aufgebracht.

Vorzugsweise ist eine oberflächennahe Schicht der Laminatstruktur beheizbar ausgebildet, wobei insbesondere die beheizbare Schicht mittels in der beheizbaren Schicht einlaminierten Heizelementen einer Wasserheizung, einer Carbonheizung mit Carbonfilamenten und/oder einer elektrischen Heizung heizbar ist. Statt heißen Wassers kann auch heißes Öl durch Heizschlangen geführt werden. Eine Carbonheizung hat den Vorteil, dass die mit Gleichstrom betriebenen Carbonfilamente den gleichen Wärmeausdehnungskoeffizienten aufweisen, wie das die Carbonfilamente umgebende Material. Diese beheizbare Schicht ist vorzugsweise ein Infusionslaminat.

Vorzugsweise ist oder sind in oder auf die beheizbare Schicht der Laminatstruktur eine wärmeleitende Struktur, insbesondere ein Drahtgeflecht, und/oder Temperatursensoren eingelassen oder aufgebracht. Auch eine Schicht aus einer Kunststofffolie mit eingelassenen Taschen mit Silikon oder einem wärmeleitenden Öl ist als wärmeleitende Struktur geeignet.

Die Sandwich-Schicht weist vorzugsweise wenigstens eine Verstärkungsschicht auf, vorzugsweise zwei, die insbesondere PET-Schaum, PVC-Schaum oder Balsaholz umfasst und/oder insbesondere ein guter thermischer Isolator ist. Damit wird die Heizenergie bevorzugt in Richtung auf das herzustellende Rotorblatt gerichtet und geht nicht nach außen verloren. Gleichzeitig wird durch die Versteifungsschicht, die mehrere Zentimeter dick sein kann, die Form weiter versteift.

Die letzte Schicht oberhalb der beheizbaren Schicht wird in Kontur gefräst und oder lackiert, so dass eine spezifikationstreue Form entsteht. Die Lackierung der Oberfläche des Formflächenkörpers umfasst vorzugsweise eine Lackschicht umfassend Polyurethan, Vinylester, Polyester, Epoxidharz und/oder PTFE und/oder keramische Additive. Diese Lacke eignen sich besonders für die Herstellung von Rotorblättern in der Direktform.

Mit der Direktform können Rotorblattkomponenten oder ganze Rotorblätter gefertigt werden. Dazu ist die Direktform vorzugsweise aus mehreren Direktformsegmenten zusammengesetzt oder zusammensetzbar. Mittels der Segmente der Direktform können einzelne Teile beispielsweise von Halbschalen von Rotorblättern hergestellt werden. Die Direktformsegmente können parallel hergestellt werden, was die Herstellung weiter beschleunigt.

Es können mehrere Direktformen bzw. Direktformsegmente für einzelne Rotorblattabschnitte zur Verfügung gestellt werden und diese Direktformsegmente miteinander verbunden werden, was eine modulare Bauweise von Rotorblättern ermöglicht, um ein Rotorblatt zu fertigen. Segmentierte Direktformen können auch einfacher gehandhabt und transportiert werden, als eine einstückige Direktform.

Mit der erfindungsgemäßen Direktform können ggf. nötige Konturänderungen an der Blattgeometrie vor der Serienform geändert werden. Rotorblätter können fünf bis sechs Monate früher gebaut werden, als dies bislang möglich war. Die Entwicklung hat im Gegenzug auch fünf bis sechs Monate mehr Zeit für die Strukturentwicklung und das Design als bisher. Die Serienform muss erst dann gebaut werden, wenn ein Blatttest mit einem in der Direktform gefertigten Blatt positiv beendet wurde. Ferner entfällt ein Urmodell, so dass auch dessen spätere Einlagerung und dessen Kosten entfallen.

Eine spätere Serienform kann in dieser Direktform auf einem maschinell nachgearbeiteten Blatt gebaut werden. Hierzu wird das eingelegte Blatt bepastet und gefräst. Somit ist kein Urmodell nötig. Das das Urmodell ersetzende Rotorblatt kann anschließend gesäubert und weiterverwendet werden.

Die der Erfindung zugrunde liegende Aufgabe wird auch durch eine Verwendung einer Direktform, insbesondere einer erfindungsgemä-ßen oben beschriebenen Direktform, zur Herstellung eines Rotorblatts für Windenergieanlagen, einer Komponente eines Rotorblatts oder eines Rotorblattabschnitts, gelöst.

Ebenfalls wird die der Erfindung zugrunde liegende Aufgabe durch ein Verfahren zum Herstellen einer Direktform für Rotorblätter für Windenergieanlagen, Komponenten von Rotorblättern oder Rotorblattabschnitte, insbesondere einer erfindungsgemäßen oben beschriebenen Direktform, gelöst, das sich dadurch auszeichnet, dass ein Mallengerüst aus einer Mehrzahl von flächigen Paneelen aufgebaut wird, die quer zur Längserstreckung des Rotorblatts ausgerichtet und in Richtung der Längserstreckung des Rotorblatts voneinander beabstandet hintereinander angeordnet werden, wobei in Aussparungen der Paneele, die in ihrer Abfolge im Mallengerüst im Wesentlichen einen Verlauf einer Kontur eines Teils eines Rotorblattprofils nachbilden, ein Formflächenkörper eingebracht wird, der eine Schichtstruktur aufweist, die eine Stützschicht und eine Sandwichschicht umfasst, wobei zunächst eine Stützschicht aus Leisten aufgebaut wird, die die Abstände zwischen den Paneelen überbrückend in Längsrichtung des Rotorblatts ausgerichtet werden, auf die eine Sandwichschicht mit einer mehrschichtigen Laminatstruktur aufgebracht wird, deren Oberfläche gefräst und/oder lackiert wird, so dass sie eine Kontur eines Teils eines herzustellenden Rotorblatts aufweist. Diese Vorgehensweise ist bedeutend schneller als die übliche Herstellung eines Urmodells, dessen Abformung und Herstellung der Fertigungsform.

Das Verfahren wird vorzugsweise dadurch weitergebildet, dass beim Aufbau der Sandwichschicht in oder auf eine oberflächennahe Schicht Heizelemente, eine wärmeleitende Struktur, insbesondere ein Drahtgeflecht, und/oder Temperatursensoren ein- und/oder auflaminiert werden.

Die zu den Erfindungsgegenständen, also der Direktform, der Verwendung und dem Verfahren, genannten Eigenschaften, Merkmale und Vorteile gelten uneingeschränkt auch für die jeweils anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Mallengerüsts,
- Fig. 2: eine schematische Darstellung eines Teils einer Direktform,
- Fig. 3a)-3d): schematische Darstellungen von Stahl-Unterkonstruktionen,
- Fig. 4: eine schematisierte und vereinfachte Darstellung eines Teils einer erfindungsgemäßen Direktform,
- Fig. 5a), 5b): schematisierte und vereinfachte Darstellungen von Teilen einer erfindungsgemäßen Direktform,
- Fig. 6: eine schematisierte und vereinfachte Detaildarstellung einer erfindungsgemäßen Direktform und
- Fig. 7: eine weitere schematische und vereinfachte Darstellung von Details einer erfindungsgemäßen Direktform.

In den Zeichnungen sind jeweils gleiche oder gleichartige Elemente und/oder Teile mit denselben Bezugsziffern versehen, so dass von einer erneuten Vorstellung jeweils abgesehen wird.

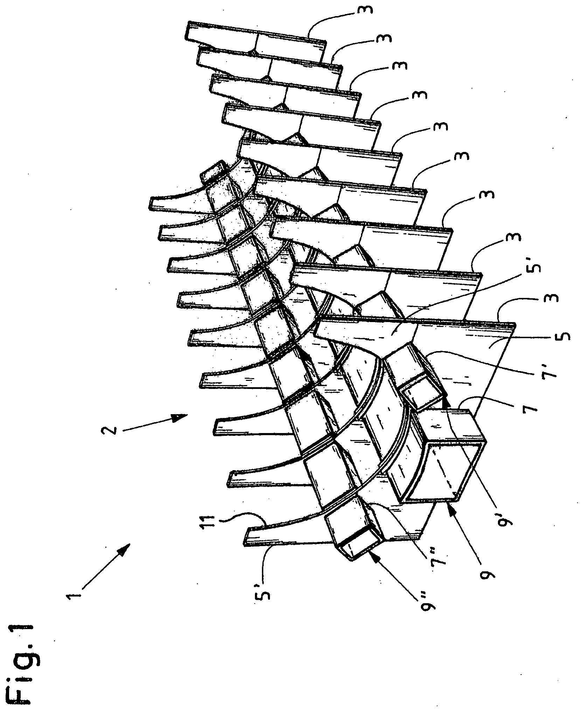

In Fig. 1 ist ein Mallengerüst 2 eines Teils einer erfindungsgemäßen Direktform 1 schematisch dargestellt. Das Mallengerüst 2 umfasst eine Reihe von Paneelen 3, die im unteren Bereich rechteckig ausgebildet sind und im oberen Bereich eine halbkreisförmige Aussparung bzw. Innenkontur 11 aufweisen. Es handelt sich somit um einen Teil eines Mallengerüsts 2, der für einen wurzelseitigen Teil eines Rotorblatts ausgebildet ist.

Jedes Paneel 3 umfasst Paneelsegmente 5, 5', die jeweils zu einem Paneel 3 zusammengesetzt werden. Die Segmentierung dient dazu, Carbon-Träger 9, 9', 9" in Längsrichtung des herzustellenden Rotorblatts in das Mallengerüst 2 zu dessen Stabilisierung einzuziehen bzw. einzulegen. Die Segmente 5, 5' der Paneele 3 werden nach dem Einlegen der Träger 9, 9', 9" miteinander verbunden. Die Paneele 3 werden auch als "Mallen" bezeichnet. Die Träger 9, 9', 9" sind in Aussparungen 7, 7', 7" der Paneele 3 angeordnet.

Auf diese Weise ergibt sich eine selbsttragende und steife Struktur.

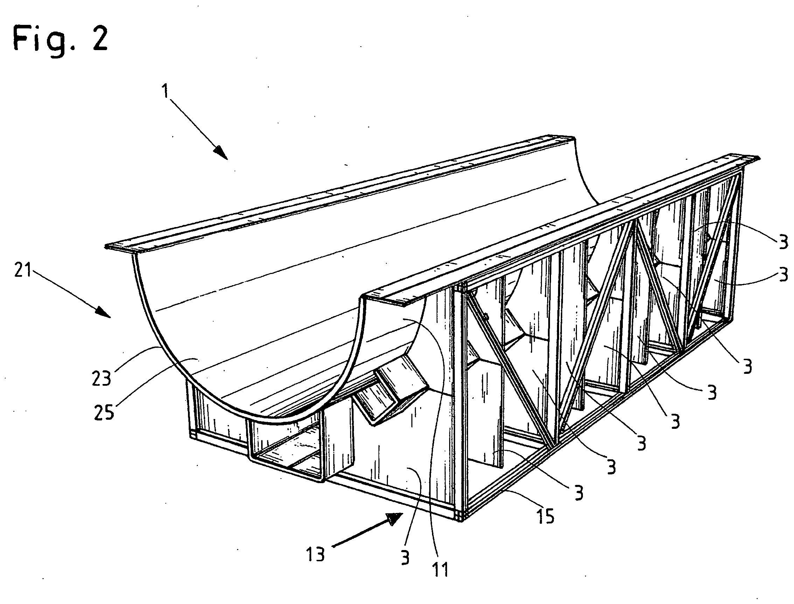

In Fig. 2 ist gezeigt, wie das in Fig. 1 dargestellte Mallengerüst 2 in eine Stahl-Unterstruktur 15 eingefügt ist, die insbesondere der Handhabung und dem Transport dient. Die Stahl-Unterstruktur 15, die den Unterbau 13 des Mallengerüsts unterstützt, ist leichtgewichtig und einfach handhabbar.

Ebenfalls ist in Fig. 2 dargestellt, dass in die Innenkontur 11 der Paneele 3 ein halbzylindrischer Formflächenkörper 21 eingelassen ist, der die eigentliche Form der Direktform 1 darstellt, da in die Oberfläche des Formflächenkörpers 21 die Laminatlagen des herzustellenden Rotorblatts eingelegt werden. Der Formflächenkörper 21 weist eine Schichtstruktur 23 auf, die mit einer Lackierung 25 abgeschlossen ist. Die Lackierung 25 ist so gewählt, dass insbesondere ein leichtes Ablösen des fertiggestellten Rotorblatts erleichtert wird. Der Formflächenkörper 21 gibt die Kontur des zu fertigenden Rotorblattabschnitts vor.

Die Paneele 3 selber sind vorzugsweise aus einer Composit-Sandwich-Struktur hergestellt und umfassen als Kern beispielsweise PET-Schaum, PVC-Schaum und/oder Balsaholz, wobei der Kern von einer Laminatstruktur eingehüllt ist.

Das in Fig. 2 dargestellte Teil kann ein Segment einer Direktform 1 sein, das mit weiteren Segmenten, die beispielsweise einen mittleren und einen blattspitzenseitigen Teil der Direktform darstellen, zusammengesetzt werden kann.

Mit der in Fig. 2 gezeigten Direktform ist ein Urmodell nicht mehr notwendig.

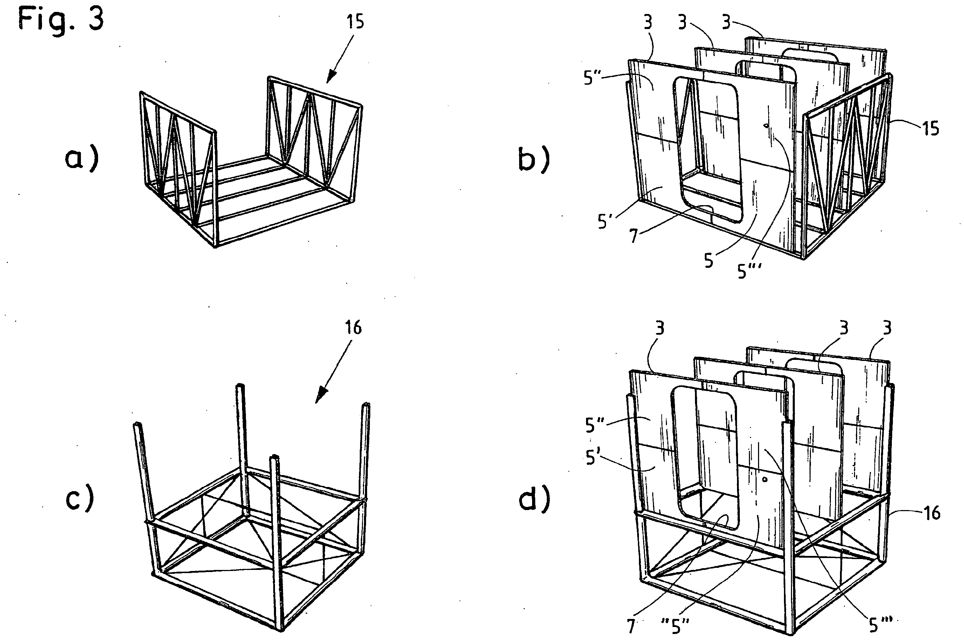

In den Figuren 3a) und 3b) ist ein erstes Beispiel einer Stahl-Unterstruktur 15 gezeigt. Diese Stahl-Unterstruktur 15, die in Fig. 3b) mit eingelassenen Paneelen gezeigt ist, weist zwei Seitenflächen auf, die zur Seite hin die Struktur stabilisieren, in der Art eines Geländers. Die Stahl-Unterstruktur 15 ist im Querschnitt U-förmig.

Die in Fig. 3b) gezeigten Paneele 3 in der Stahl-Unterstruktur 15 sind aus jeweils vier Segmenten 5, 5', 5", 5'" aufgebaut, die zusammengesetzt werden, nachdem ein Carbon-Träger 9 (nicht dargestellt) eingesetzt worden ist.

In den Figuren 3c) und 3d) ist eine alternative Stahl-Unterstruktur 16 ohne und mit Paneelen 3 gezeigt, die aus Röhren zusammengesetzt ist. Die Unterfläche wird durch in quadratischer Anordnung miteinander verbundene Röhren, die in zwei Ebenen untereinander angeordnet sind und in den Ecken mit jeweils vertikal gerichteten Röhren verbunden sind, gehalten. Die Struktur ist mittels Stahlseilen stabilisiert, die eine Verspannung in verschiedenen Diagonalen bietet, wobei die Stahlseile in Eckpunkten der Konstruktion oder in der Mitte von Trägern verspannt sind.

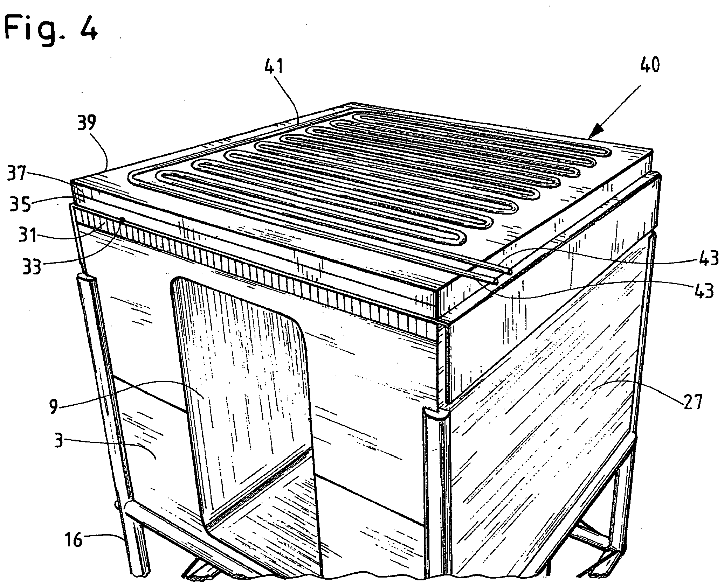

In den Fig. 4 bis 7 ist der Herstellungsprozess einer Direktform 1 beispielhaft weiter dargestellt.

In Fig. 4 ist in einer sehr schematisierten und vereinfachten Darstellung eine teilfertige Direktform dargestellt. Der Übersichtlichkeit halber ist ein quaderförmiger Bereich dargestellt, bei dem die Krümmung der Oberfläche der Form weggelassen wurde. So wird die Schichtenstruktur deutlicher.

Im unteren Bereich der Fig. 4 ist die Stahl-Unterstruktur 16 aus Fig. 3c) dargestellt, in die das Mallengerüst 2 mit Paneelen 3 und einem Träger 9 eingelassen ist. Seitlich wird das Mallengerüst von Seitenpaneelen 27, von denen eine in Fig. 4 direkt sichtbar ist, abgeschlossen.

Auf der Oberseite des segmentierten Paneels 3, das in diesem Fall aus sechs Segmenten besteht, ist eine Stützschicht 31 aus langgestreckten Leisten angeordnet, die die durch die aufeinander folgenden Paneele und deren Innenkonturen vorgegebene Form in der Fläche fortsetzt. Die Leisten sind aus PET, PVC oder Holz hergestellt und passen sich durch Biegung der durch die Paneele 3 vorgegebenen Kontur an. In Fig. 4 sind die Querschnittsflächen der Leisten sichtbar.

Diese Stützschicht 31 ist mit einer ersten Laminatschicht 33 überlaminiert, die auch die Seitenpaneele 27 teilweise überdeckt und somit einen Zusammenhalt bietet. Auf die erste Laminatschicht 33 sind eine erste Versteifungsschicht 35 und eine zweite Versteifungsschicht 37 aufgebracht, die sowohl der Wärmeisolierung als auch der Versteifung der Struktur dienen. Geeignete Materialien, die eine Wärmeisolierung und ein größeres Trägheitsmoment als eine Laminatschicht aufweisen, sind beispielsweise PET-Schaum, PVC-Schaum oder Balsaholz. Die Gesamtdicke dieser beiden Schichten ist ca. 5 cm. Die Dicke der ersten Laminatschicht 33 ist ca. 5 mm bis 10 mm.

Auf die Oberfläche der zweiten Versteifungsschicht 37 ist eine zweite Laminatschicht 39 aufgetragen, die einen thermischen Schutz für die darunterliegende Sandwich-Struktur bietet. Die zweite Laminatschicht 39 ist ebenfalls ein guter Isolator, auf die eine Heizung in Form von einer Heizschlange 41 aufgebracht ist, die beispielsweise durch erhitztes Wasser oder erhitztes Öl durchströmt werden kann. Hierzu dienen zwei Anschlüsse 43, 43' zum Einleiten und zum Ableiten der Heizflüssigkeit. Anstelle einer Flüssigkeitsheizung wie einer Wasserheizung oder einer Ölheizung können auch elektrische Heizungen, beispielsweise eine Carbonheizung mit elektrisch beiheizbaren Carbon-Filamenten verwendet werden. Diese haben den Vorteil einer geringen thermischen Ausdehnung bzw. einer thermischen Ausdehnung, die der thermischen Ausdehnung des umgebenden Laminats entspricht, wodurch sich die Laminatstruktur auch bei Erwärmung nicht wieder löst.

Die Windungsstruktur der Heizschlange 41 sorgt für eine gleichmäßige Verteilung der eingebrachten Wärme. Als Schläuche können beispielsweise Kupferrohre oder GFK-Rohre und GFK-Leitungen verwendet werden. Die Zwischenräume zwischen den Windungen der Heizschlange werden mit Laminatmaterial aufgefüllt.

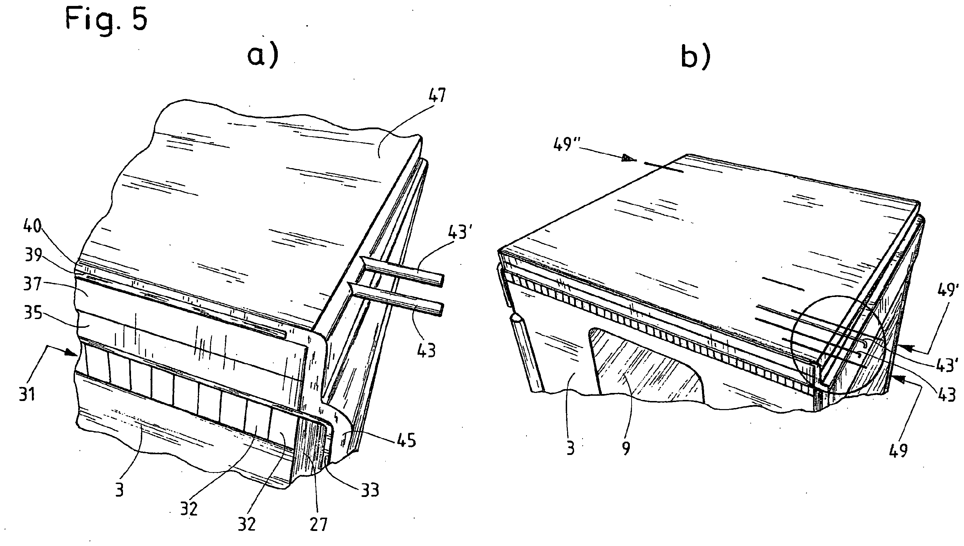

In Fig. 5a) ist ein Detail der Schichtstruktur einer erfindungsgemäßen Direktform in einem weiteren Herstellungszustand im Querschnitt dargestellt. Hier sind insbesondere die Querschnitte der Leisten 32 der Stützschicht 31 auf dem Paneel 3 zu erkennen, die seitlich von dem Seitenpaneel 25 eingefasst wird und von der ersten Laminatschicht 33 eingefasst wird.

Auf den darauf aufbauenden Versteifungsschichten 35, 37 ist die bereits zuvor gezeigte zweite Laminatschicht 39, die der Wärmeisolierung dient, gezeigt, sowie eine darauf aufgelegte beheizbare Schicht 40. In diese beheizbare Schicht 40 ist die in Fig. 4 dargestellte Heizschlange 41, deren Anschlüsse 43, 43' in Fig. 5a) dargestellt sind, eingelassen. Dazu ist diese Schicht zwischen den Windungen der Heizschlange 41 aufgetragen worden. Diese Schicht überdeckt als dritte Laminatschicht 45 auch die Seiten, bis hin zum Seitenpaneel 27.

Auf der Oberfläche dieser beheizbaren Schicht 40 ist ein wärmeleitendes Drahtgeflecht 47 aufgebracht, das für eine weitere Vergleichmäßigung des Wärmeeintrags sorgt. Der Abstand zwischen diesem Drahtgeflecht 47 und der Heizschlange 41 beträgt etwa 3 mm aus Laminatmaterial.

Das Drahtgeflecht kann beispielsweise aus Aluminium oder Kupfer sein. Alternativ kann auch eine Folie vorgesehen sein, die ein Öl oder ein Silikon in einer oder mehreren Taschen aufweist, die ebenfalls wärmeleitend sind.

In Fig. 5b) ist zusätzlich zu der Darstellung in Fig. 5a) gezeigt, dass mehreren Temperatursensoren 49, 49', 49" an der Stelle der Anschlüsse 43, 43' sowie an einer anderen Stelle auf der gegenüberliegenden Seite der Heizschlangen 41 in der beheizbaren Schicht 40 angeordnet ist und die Temperatur in der Schicht messen. Dabei ist der erste Temperatursensor 49 an der Stelle des Auslassanschlusses 43, der zweite Sensor 49' an der Stelle des Einlassanschlusses 43' und der Temperatursensor 49" an einer Stelle zwischen dem Einlass und dem Auslass im Verlauf der Heizschlange 41 angeordnet. Die Messdaten dieser Sensoren werden zur Steuerung der Heizung verwendet.

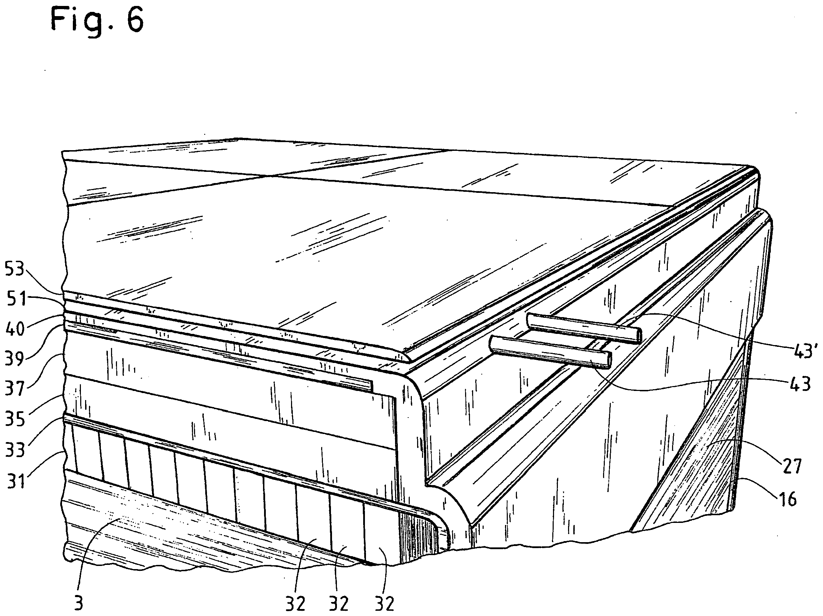

In Fig. 6 ist wiederum ein Detailquerschnitt durch einen Teil der erfindungsgemäßen Direktform kurz vor der Fertigstellung gezeigt. Zusätzlich zu den bereits in den vorangegangenen Figuren gezeigten Details ist eine vierte Laminatschicht 51 oberhalb der beheizbaren Schicht 40 sowie eine Deckschicht 53 auf der vierten Laminatschicht 51 dargestellt. Die Deckschicht kann auch ein Teil der vierten Laminatschicht 51 sein. Mit der vierten Laminatschicht 51 und der Deckschicht 53 ist in diesem Bearbeitungszustand die Heizung, also die Heizschlange 41, zu etwa 8 mm bis 10 mm mit Laminatmaterial bedeckt.

Überschüssiges Laminatmaterial wird anschließend bei der Herstellung der einzustellenden Kontur wieder abgefräst, so dass die Deckschicht 53 auch als abzufräsendes Material verstanden werden kann. Das abzufräsende Material hat eine Dicke von 3 mm bis 4 mm, so dass nach dem Abfräsen die Heizschlangen mit etwa 5 mm bis 6 mm Laminatmaterial der Laminatschicht 51 bedeckt sind.

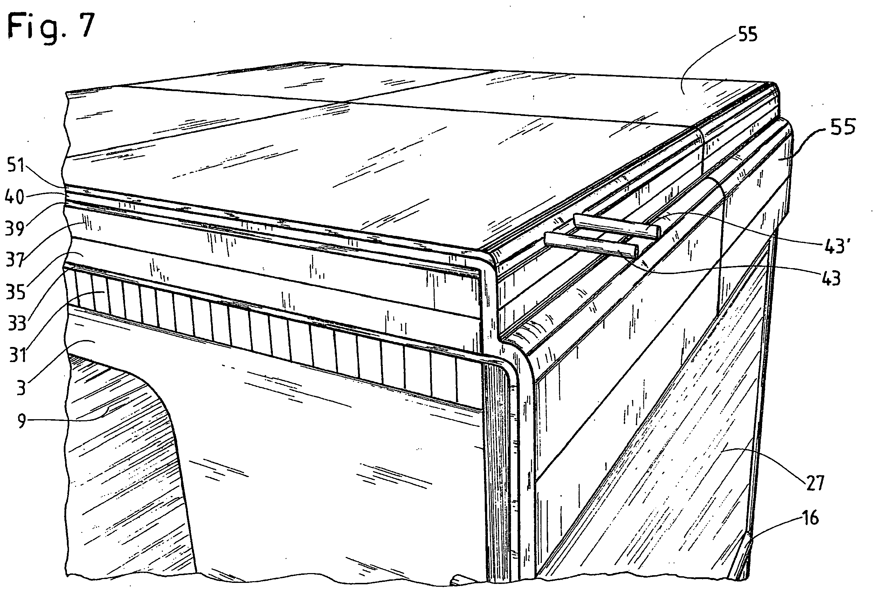

In Fig. 7 ist gezeigt, dass nach dem Abfräsen und Abschleifen eine Lackschicht 55 auf die Sandwich-Struktur und Laminatstruktur aufgebracht wird, die den Abschluss der Form bildet. Es handelt sich vorzugsweise um eine gleichmäßige Beschichtung, die sehr glatt ist. Eine Trennung des eingelegten Laminatmaterials des herzustellenden Rotorblatts von dieser Oberfläche geschieht in der Regel durch die Zugabe von Chemikalien. Geeignete Materialien für die Lackschicht 55 sind beispielsweise Polyurethan, Vinylester, Polyester, Epoxid bzw. Epoxidharz, ein PTFE-Lack, der selbsttrennend ist, oder ein Lack der keramische Additive oder Additivsysteme enthält.

Die Direktform, die in einem so genannten "direct tooling"-Verfahren hergestellt bzw. verwendet wird, ermöglicht eine Zeitersparnis für die erste Formung von bis zu 50% sowie eine deutliche Kostenersparnis. Es muss kein Urmodell hergestellt und gelagert werden. Verschiedene Teile der Direktform können simultan bzw. parallel hergestellt werden, was zu einer Zeitersparnis führt, da diese Direktformsegmente später miteinander verbunden werden können. Es ergibt sich die Möglichkeit eines molaren Designs, das gleichzeitig leichtgewichtig und steif ist.

Die Direktform kann auch für große Rotorblätter einfach transportiert werden, weil sie in kleinere Teile unterteilt werden kann.

Weiterhin ermöglicht die Verwendung von Direktformen die Entwicklung von Rotorblättern in-situ sowohl in Bezug auf Material als auch auf Form.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Direktform
- 2: Mallengerüst
- 3: Paneel
- 5 - 5"': Paneelsegment
- 7 - 7": Aussparung
- 9 - 9": Träger
- 11: Innenkontur eines Paneels
- 13: Unterbau
- 15, 16: Stahl-Unterstruktur
- 21: Formflächenkörper
- 23: Schichtstruktur
- 25: Lackierung
- 27: Seitenpaneel
- 31: Stützschicht
- 32: Leiste
- 33: erste Laminatschicht
- 35: erste Versteifungsschicht
- 37: zweite Versteifungsschicht
- 39: zweite Laminatschicht
- 40: beheizbare Schicht
- 41: Heizschlange
- 43, 43': Anschlüsse der Heizschlange
- 45: dritte Laminatschicht
- 47: wärmeleitendes Drahtgeflecht
- 49 - 49": Temperatursensor
- 51: vierte Laminatschicht
- 53: Deckschicht
- 55: Lackschicht

## Patentansprüche

1. Direktform (1) für Rotorblätter für Windenergieanlagen, Komponenten von Rotorblättern oder Rotorblattabschnitte, umfassend ein Mallengerüst (2) und einen von dem Mallengerüst (2) im Form gehaltenen Formflächenkörper (21), wobei das Mallengerüst (2) aus einer Mehrzahl von flächigen Paneelen (3) aufgebaut ist, die quer zur Längserstreckung des Rotorblatts ausgerichtet sind und in Richtung der Längserstreckung des Rotorblatts voneinander beabstandet hintereinander angeordnet sind, wobei die Paneele (3) des Mallengerüsts (2) Aussparungen (7) aufweisen, in die der Formflächenkörper (21) eingebracht ist und die in ihrer Abfolge im Mallengerüst (2) im Wesentlichen einen Verlauf einer Kontur eines Teils eines Rotorblattprofils nachbilden, wobei der Formflächenkörper (21) eine Schichtstruktur (23) aufweist, die eine Stützschicht (31) und eine Sandwichschicht (33, 35, 37, 39, 40, 45, 47, 51, 53, 55) umfasst, wobei die Stützschicht (31) aus Leisten (32) aufgebaut ist, die die Abstände zwischen den Paneelen (3) überbrückend in Längsrichtung des Rotorblatts ausgerichtet sind, wobei die auf der Stützschicht (31) angeordnete Sandwichschicht (33, 35, 37, 39, 40, 45, 47, 51, 53, 55) eine mehrschichtige Laminatstruktur umfasst, deren Oberfläche gefräst und/oder lackiert ist und die Kontur eines Teils eines herzustellenden Rotorblatts aufweist.

2. Direktform (1) nach Anspruch 1, **dadurch gekennzeichnet, dass** die Paneele (3) mit wenigstens einem in Längsrichtung des Rotorblatts angeordneten Träger (9 - 9") versteift sind, der insbesondere als balkenartiger Carbonträger ausgebildet ist.

3. Direktform (1) nach Anspruch 1 oder 2, **dadurch gekennzeichnet, dass** die Paneele (3) als Composit-Sandwich-Paneele ausgebildet sind, die insbesondere zur Aufnahme des wenigstens einen Trägers (9 - 9") segmentiert und mit Aufnahmen (7 - 7") für den wenigstens einen Träger (9 - 9") ausgebildet sind.

4. Direktform (1) nach einem der Ansprüche 1 bis 3, **dadurch gekennzeichnet, dass** die Direktform (1) in einer Stahl-Unterstruktur (15, 16) angeordnet ist.

5. Direktform (1) nach einem der Ansprüche 1 bis 4, **dadurch gekennzeichnet, dass** eine oberflächennahe Schicht (40) der Laminatstruktur beheizbar ausgebildet ist, wobei insbesondere die beheizbare Schicht (40) mittels in der beheizbaren Schicht (40) einlaminierten Heizelementen (41, 43, 43') einer Wasserheizung, einer Carbonheizung mit Carbonfilamenten und/oder einer elektrischen Heizung heizbar ist.

6. Direktform (1) nach Anspruch 5, **dadurch gekennzeichnet, dass** in oder auf die beheizbare Schicht (40) der Laminatstruktur eine wärmeleitende Struktur, insbesondere ein Drahtgeflecht (47), und/oder Temperatursensoren ( 49 - 49") eingelassen oder aufgebracht ist oder sind.

7. Direktform (1) nach einem der Ansprüche 1 bis 6, **dadurch gekennzeichnet, dass** die Sandwichschicht (33, 35, 37, 39, 40, 45, 47, 51, 53, 55) wenigstens eine Versteifungsschicht (35, 37) aufweist, die insbesondere PET-Schaum, PVC-Schaum oder Balsaholz umfasst und/oder insbesondere ein guter thermischer Isolator ist.

8. Direktform (1) nach einem der Ansprüche 1 bis 7, **dadurch gekennzeichnet, dass** die Lackierung der Oberfläche des Formflächenkörpers (21) eine Lackschicht umfassend Polyurethan, Vinylester, Polyester, Epoxidharz und/oder PTFE und/oder keramische Additive umfasst.

9. Direktform (1) nach einem der Ansprüche 1 bis 8, **dadurch gekennzeichnet, dass** die Direktform (1) aus mehreren Direktformsegmenten zusammengesetzt oder zusammensetzbar ist.

10. Verwendung einer Direktform (1), insbesondere nach einem der Ansprüche 1 bis 9, zur Herstellung eines Rotorblatts für Windenergieanlagen, einer Komponente eines Rotorblatts oder eines Rotorblattabschnitts.

11. Verfahren zum Herstellen einer Direktform (1) für Rotorblätter für Windenergieanlagen, Komponenten von Rotorblättern oder Rotorblattabschnitte, insbesondere nach einem der Ansprüche 1 bis 10, **dadurch gekennzeichnet, dass** ein Mallengerüst (2) aus einer Mehrzahl von flächigen Paneelen (3) aufgebaut wird, die quer zur Längserstreckung des Rotorblatts ausgerichtet und in Richtung der Längserstreckung des Rotorblatts voneinander beabstandet hintereinander angeordnet werden, wobei in Aussparungen (7) der Paneele (3), die in ihrer Abfolge im Mallengerüst (2) im Wesentlichen einen Verlauf einer Kontur eines Teils eines Rotorblattprofils nachbilden, ein Formflächenkörper (21) eingebracht wird, der eine Schichtstruktur (23) aufweist, die eine Stützschicht (31) und eine Sandwichschicht (33, 35, 37, 39, 40, 45, 47, 51, 53, 55) umfasst, wobei zunächst eine Stützschicht (31) aus Leisten (32) aufgebaut wird, die die Abstände zwischen den Paneelen (3) überbrückend in Längsrichtung des Rotorblatts ausgerichtet werden, auf die eine Sandwichschicht (33, 35, 37, 39, 40, 45, 47, 51, 53, 55) mit einer mehrschichtigen Laminatstruktur aufgebracht wird, deren Oberfläche gefräst und/oder lackiert wird, so dass sie eine Kontur eines Teils eines herzustellenden Rotorblatts aufweist.

12. Verfahren nach Anspruch 11, **dadurch gekennzeichnet, dass** beim Aufbau der Sandwichschicht (33, 35, 37, 39, 40, 45, 47, 51, 53, 55) in oder auf eine oberflächennahe Schicht Heizelemente (41, 43, 43'), eine wärmeleitende Struktur, insbesondere ein Drahtgeflecht (47), und/oder Temperatursensoren ( 49 - 49") ein- und/oder auflaminiert werden.

## Claims

1. A direct mold (1) for rotor blades for wind turbines, components of rotor blades or rotor blade sections, comprising a plank frame (2) and a mold surface body (21) held in shape by the plank frame (2), wherein the plank frame (2) is made of a plurality of planar panels (3), which are aligned transversely with respect to the longitudinal extension of the rotor blade and are arranged spaced behind each other in the direction of the longitudinal extension of the rotor blade, wherein the panels (3) of the plank frame (2) have recesses (7), into which the mold surface body (21) is introduced and which reproduces in their sequence in the plank frame (2) mainly a progression of a contour of a part of a rotor blade profile, wherein the mold surface body (21) has a layer structure (23), which comprises a support layer (31) and a sandwich layer (33, 35, 37, 39, 40, 45, 47, 51, 53, 55), wherein the support layer (31) is made of strips (32), which bridge the distances between the panels (3) and are aligned in the longitudinal direction of the rotor blade, wherein the sandwich layer (33, 35, 37, 39, 40, 45, 47, 51, 53, 55) arranged on the support layer (31) comprises a multi-layered laminate structure, the surface of which is milled and/or painted and has the contour of a part of a rotor blade to be produced.

2. The direct mold (1) according to claim 1, **characterized in that** the panels (3) are reinforced with at least one support (9 - 9") arranged in the longitudinal direction of the rotor blade, which is designed in particular as a beam-like carbon support.

3. The direct mold (1) according to claim 1 or 2, **characterized in that** the panels (3) are designed as composite sandwich panels, which are segmented in particular for receiving the at least one support (9 - 9") and are designed with receivers (7 - 7") for the at least one support (9 - 9").

4. The direct mold (1) according to one of claims 1 to 3, **characterized in that** the direct mold (1) is arranged in a steel substructure (15, 16).

5. The direct mold (1) according to one of claims 1 to 4, **characterized in that** a near-surface layer (40) of the laminate structure is designed in a heatable manner, wherein in particular the heatable layer (40) is heatable by means of heating elements (41, 43, 43') of a water heater, a carbon heater with carbon filaments and/or an electric heater laminated into the heatable layer (40).

6. The direct mold (1) according to claim 5, **characterized in that** a heat-conducting structure, in particular a wire mesh (47), and/or temperature sensors (49 - 49") is or are embedded in or applied to the heatable layer (40) of the laminate structure.

7. The direct mold (1) according to one of claims 1 to 6, **characterized in that** the sandwich layer (33, 35, 37, 39, 40, 45, 47, 51, 53, 55) has at least one reinforcing layer (35, 37), which comprises in particular PET foam, PVC foam or balsa wood and/or is in particular a good thermal insulator.

8. The direct mold (1) according to one of claims 1 to 7, **characterized in that** the painting of the surface of the mold surface body (21) comprises a paint layer comprising polyurethane, vinyl ester, polyester, epoxy resin and/or PTFE and/or ceramic additive.

9. The direct mold (1) according to one of claims 1 to 8, **characterized in that** the direct mold (1) is or can be made up of several direct mold segments.

10. A use of a direct mold (1), in particular according to one of claims 1 to 9, for producing a rotor blade for wind turbines, a component of a rotor blade or a rotor blade section.

11. A method for producing a direct mold (1) for rotor blades for wind turbines, components of rotor blades or rotor blade sections, in particular according to one of claims 1 to 10, **characterized in that** a plank frame (2) is made of a plurality of planar panels (3), which are aligned transversely with respect to the longitudinal extension of the rotor blade and are arranged spaced behind each other in the direction of the longitudinal extension of the rotor blade, wherein in recesses (7) of the panels (3), which reproduces in their sequence in the plank frame (2) mainly a progression of a contour of a part of a rotor blade profile, a mold surface body (21) is introduced, which has a layer structure (23), which comprises a support layer (31) and a sandwich layer (33, 35, 37, 39, 40, 45, 47, 51, 53, 55), wherein at first a support layer (31) is made of strips (32), which bridge the gaps between the panels (3) and are aligned in the longitudinal direction of the rotor blade, onto which a sandwich layer (33, 35, 37, 39, 40, 45, 47, 51, 53, 55) with a multi-layered laminate structure is applied, the surface of which is milled and/or painted so that it has a contour of a part of a rotor blade to be produced.

12. The method according to claim 11, **characterized in that**, during the construction of the sandwich layer (33, 35, 37, 39, 40, 45, 47, 51, 53, 55), heating elements (41, 43, 43'), a heat-conducting structure, in particular a wire mesh (47) and/or temperature sensors (49 - 49") are laminated into and/or onto a near-surface layer.

## Revendications

1. Moule direct (1) pour des pales de rotor d'éoliennes, des composants de pales de rotor ou des parties de pale de rotor, comportant un cadre de construction (2) et un corps de surface de moule (21) contenu dans le moule du cadre de construction (2), le cadre de construction (2) étant réalisé au moyen d'une pluralité des parois planes de type panneaux (3), qui sont orientés transversalement à l'étendue longitudinale de la pale de rotor et disposés les uns à la suite des autres en étant espacés dans la direction de l'extension longitudinale de la pale de rotor, lesdits panneaux (3) du cadre de construction (2) présentant des évidements (7), le corps de surface de moule (21) étant inséré dans les évidements (7) qui reproduisent sensiblement, dans leur séquence dans la structure de modèle (2), le profil d'un contour d'une partie d'un profil de pale de rotor, le corps de surface de moule (21) ayant une structure en couches (23) comprenant une couche de support (31) et une couche en sandwich (33, 35, 37, 39, 40, 45, 47, 51, 53, 55), où la couche de support (31) est faite de bandes (32) alignées dans la direction longitudinale de la pale de rotor de manière à ponter les distances entre les panneaux (3), la couche en sandwich (33, 35, 37, 39, 40, 45, 4, 7, 51, 53, 55) disposée sur la couche de support (31) comprenant une structure stratifiée multicouches, la surface de celle-ci étant meulée et / ou revêtue et présente un contour d'une partie d'une pale de rotor à fabriquer.

2. Moule direct (1) selon la revendication 1, **caractérisé en ce que** les panneaux (3) sont raidis avec au moins un support (9 - 9") disposé dans la direction longitudinale de la pale de rotor, qui est en particulier conçu comme un support en carbone en forme de poutre.

3. Moule direct (1) selon la revendication 1 ou la revendication 2, **caractérisé en ce que** les panneaux (3) sont sous la forme de panneaux en composite sandwich, qui sont segmentés en particulier pour recevoir ledit au moins un support (9 - 9") et avec des renfoncements (7 - 7") pour ledit au moins un support (9 - 9").

4. Moule direct (1) selon l'une quelconque des revendications 1 à 3, **caractérisé en ce que** le moule direct (1) est disposé dans une sous-structure (15, 16) en acier.

5. Moule direct (1) selon l'une quelconque des revendications 1 à 4, **caractérisé en ce qu'**une couche proche de la surface (40) de la structure stratifiée est formée de façon à être apte à être chauffée, la couche (40) apte à être chauffée étant en particulier apte à être chauffée au moyen d'éléments chauffants (41, 43, 43") stratifiés dans la couche (40) apte à être chauffée d'un chauffe-eau, d'un chauffe-carbone avec des filaments de carbone et / ou un dispositif de chauffage électrique.

6. Moule direct (1) selon la revendication 5, **caractérisé en ce qu'**une structure conductrice de la chaleur, en particulier un treillis métallique (47) et / ou des capteurs de température (49 - 49"), est noyée dans, ou appliquée sur la couche (40) apte à être chauffée de la structure stratifiée.

7. Moule direct (1) selon l'une quelconque des revendications 1 à 6, **caractérisée en ce que** la couche en sandwich (33, 35, 37, 39, 40, 45, 47, 51, 53, 55) comprend au moins une couche de raidissement (35, 37), qui comprend, en particulier, de la mousse de PET, de la mousse de PVC ou du bois de balsa et / ou est en particulier un bon isolant thermique.

8. Moule direct (1) selon l'une quelconque des revendications 1 à 7, **caractérisé en ce que** le revêtement de la surface de la paroi profilée (21) comprend une couche peinte comprenant du polyuréthane, de l'ester vinylique, du polyester, une résine époxy et / ou du PTFE et / ou des additifs céramique.

9. Moule direct (1) selon l'une quelconque des revendications 1 à 8, **caractérisé en ce que** le moule direct (1) est composé ou apte à être composé par assemblage de plusieurs segments de moule direct.

10. Utilisation d'un moule direct (1), en particulier selon l'une des revendications 1 à 9, pour la fabrication d'une pale de rotor pour éoliennes, un composant d'une pale de rotor ou une partie de pale de rotor.

11. Procédé de fabrication d'un moule direct (1) pour des pales de rotor pour des éoliennes, des composants de pales du rotor ou des parties de pales de rotor, en particulier selon l'une des revendications 1 à 10, **caractérisé en ce qu'**un cadre de construction (2) est réalisé à partir d'une pluralité de panneaux plans (3) qui sont orientés transversalement à l'étendue longitudinale de la pale de rotor et qui sont disposés les uns à la suite des autres en étant espacés les uns des autres dans la direction de l'extension longitudinale de la pale de rotor, dans lequel un corps de surface de moule (21) est inséré dans les évidements (7) des panneaux (3), qui reproduisent dans leur séquence dans le cadre de construction (2) sensiblement une progression d'un contour d'une partie d'un profil de pale de rotor, lequel corps de surface de moule présente une structure en couches (23) comprenant une couche de support (31) et une couche en sandwich (33, 35, 37, 39, 40, 45, 47, 51, 53, 55) ; une couche de support (31) étant tout d'abord faite de bandes (32) alignées dans la direction longitudinale de la pale de rotor de manière à ponter les distances entre les panneaux (3), sur lesquelles est appliquée la couche en sandwich (33, 35, 37, 39, 40, 45, 47, 51, 53, 55) ayant une structure stratifiée multicouches, la surface de celle-ci étant meulée et / ou revêtue de telle sorte qu'elle présente un contour d'une partie d'une pale de rotor à fabriquer.

12. Procédé selon la revendication 11, **caractérisé en ce que** lors de la fabrication de la couche en sandwich (33, 35, 37, 39, 40, 45, 47, 51, 53, 55) sont stratifiés, dedans et / ou dessus, dans ou sur une couche proche de la surface, des éléments chauffants (41, 43, 43'), une structure conductrice de la chaleur, en particulier un treillis métallique (47), et / ou des capteurs de température (49 - 49").
